# FASCICULE DE BREVET EUROPEEN

(11) **EP 3 781 443 B1**
(45) Date de publication et mention de la délivrance du brevet: **23.11.2022**
(21) Numéro de dépôt: 19720996.8
(22) Date de dépôt: 09.04.2019
(51) Int. Cl.: B60R 9/045

(54) **ENSEMBLE DE BARRES DE TOIT DESTINÉ À ÊTRE POSITIONNÉ SUR LE TOIT D'UN VÉHICULE**
ZUR POSITIONIERUNG AUF EINEM FAHRZEUGDACH BESTIMMTE DACHBÜGELANORDNUNG
ROOF-BAR ASSEMBLY INTENDED TO BE POSITIONED ON A VEHICLE ROOF

(30) Priorité: 18.04.2018 FR 1853395
(43) Date de publication de la demande: 24.02.2021
(73) Titulaire: NOVARES France, 92140 Clamart (FR)
(72) Inventeur: HUGUET, Guillaume, 01250 NIVIGNE ET SURAN (FR); COMBE, Philippe, 01100 GEOVREISSET (FR)
(74) Mandataire: Germain Maureau
(86) Numéro de dépôt international: PCT/FR2019/050825
(87) Numéro de publication internationale: WO 2019/202236

(56) Documents cités:
- DE-A1- 10 200 753
- DE-T2- 69 022 742
- FR-A1- 2 699 475
- FR-A1- 2 952 597
- FR-A3- 3 050 966

## Description

### ENSEMBLE DE BARRES DE TOIT DESTINE A ETRE POSITIONNE SUR LE TOIT D'UN VEHICULE

La présente invention concerne un ensemble de barres de toit destiné à être positionné sur le toit d'un véhicule.

Il est connu d'utiliser des barres de toit pour supporter, par exemple, un coffre de toit ou un porte-vélos sur le toit d'un véhicule.

Le plus souvent, les barres de toit transversales sont accrochées sur des barres longitudinales fixées au véhicule. La fixation des barres de toit transversales aux barres longitudinales est souvent réalisée au moyen d'un ensemble vis-écrou traversant la barre de toit transversale et la barre longitudinale. De même, il est connu d'utiliser des mâchoires réglables positionnées à chaque extrémité de la barre de toit transversale et configurées pour serrer chacune une barre longitudinale. Pour conserver l'aérodynamisme du véhicule il est nécéssaire qu'en position longitudinale les barres de toit soient proches du toit. Inversement, il est nécessaire qu'en position transversale les barres de toit soient plus éloignées du toit (selon une direction normale au plan du toit) pour permettre le passage d'un système d'accroche d'un accessoire.

Une solution connue du document US2016243994 consiste à utiliser des barres de toit pliables pouvant être fixées sur des rails support solidaires du toit selon deux positions spécifiques, une position de non-fonctionnement, dans laquelle chaque barre de toit est fixée sur un des rails support au niveau d'une première paire de points de fixation, et une position de fonctionnement, dans laquelle chaque barre de toit est fixée sur chacun des rails support au niveau d'une deuxième paire de points de fixation. La fixation des barres de toit sur les rails support s'opère au moyen d'organes de montage pouvant être démontés sans outil. Cette solution impose toutefois que les barres de toit soient successivement démontées et remontées sur les rails support de manière à passer de la position de non-fonctionnement à la position de fonctionnement et inversement. Cette solution n'est donc pas satisfaisante car elle nécessite d'effectuer de nombreuses opérations de manutention, de positionnement précis et de montage des barres de toit, ce qui accroît de manière exagérée le temps de montage. DE69022742T2 divulgue un ensemble de barres conformément au préambule de la revendication 1.

En conséquence, la présente invention a pour objectif de fournir un ensemble de barre de toit qui limite le temps de montage tout en permettant de faire varier la distance entre le toit et la barre de toit entre la position longitudinale et la position transversale.

Selon une définition générale, l'invention concerne un ensemble de barre de toit comme divulgué par la revendication 1.

Ainsi configuré, l'ensemble de barre de toit de l'invention permettra de faire varier la distance entre la barre et le toit du véhicule. Ainsi, en position longitudinale, la barre sera proche du toit, ce qui favorise l'aérodynamisme du véhicule. En position transversale, la structure pliable de la barre permettra de rehausser la partie centrale de la barre pour permettre l'accroche d'un accessoire comme par exemple un coffre de toit ou un porte skis. Par ailleurs, la liaison pivotante de la barre sur son rail support associé évitera d'avoir à démonter et à remonter les deux extrémités de la barre lors du passage de sa position longitudinale à sa position transversale et inversement. Le temps de montage de la barre de toit sera donc grandement diminué.

Selon l'invention, la longueur de la barre dans sa position longitudinale est supérieure à la distance séparant les rails support de telle sorte que la distance séparant le segment central du plan défini par les rails support est plus grande lorsque la barre est dans sa position transversale que lorsque la barre est dans sa position longitudinale.

Selon une autre configuration particulière de l'invention, chacun des rails support comprend au moins un premier point de fixation, sur lequel peut venir se fixer le premier segment d'extrémité, au moins un deuxième point de fixation, sur lequel peut venir se fixer le deuxième segment d'extrémité lorsque la barre est dans sa position longitudinale, et au moins un troisième point de fixation, sur lequel peut venir se fixer le deuxième segment d'extrémité lorsque la barre est dans sa position transversale, la distance entre les premier et deuxième points de fixation étant supérieure à la distance entre les premier et troisième points de fixation.

Selon une autre configuration particulière de l'invention, le premier segment d'extrémité comprend un premier élément sensiblement plat et un deuxième élément sensiblement plat, lesdits premier et deuxième éléments pivotant l'un par rapport à l'autre autour d'un premier axe horizontal, le premier élément logeant un axe pivot orienté verticalement autour duquel pivote le premier segment d'extrémité et le deuxième élément étant relié de manière pivotante au segment central autour d'un deuxième axe horizontal.

Selon une autre configuration particulière de l'invention, le premier rail support est muni d'une fente longitudinale le long de laquelle peut coulisser l'axe pivot, permettant ainsi un déplacement du premier segment d'extrémité selon une direction parallèle à l'axe longitudinal lorsque la barre est orientée perpendiculairement à l'axe longitudinal et lorsque le deuxième élément est sensiblement aligné avec le premier élément ou faiblement incliné par rapport au premier élément.

Selon une autre configuration particulière de l'invention, le deuxième élément comporte une extrémité en forme de U, munie de deux ailes espacées l'une de l'autre, entre lesquelles est disposé une extrémité correspondante du premier élément, lesdites extrémités logeant au moins partiellement une goupille, alignée selon le premier axe horizontal.

Selon une autre configuration particulière de l'invention, chaque aile est apte à être logée dans une découpe correspondante du premier élément lorsque le deuxième élément est sensiblement aligné ou faiblement incliné par rapport au premier élément, et dans au moins une rainure, formée sur une face supérieure du premier rail support et orientée perpendiculairement à l'axe longitudinal, lorsque le deuxième élément est perpendiculaire ou sensiblement perpendiculaire au premier élément.

Selon une autre configuration particulière de l'invention, chaque aile est configurée pour venir s'appuyer en force contre une surface de fond de la rainure lorsque le deuxième élément est perpendiculaire ou sensiblement perpendiculaire au premier élément, maintenant ainsi la barre dans sa position transversale.

Selon une autre configuration particulière de l'invention, des moyens de verrouillage manuellement actionnables sont prévus pour permettre à un utilisateur de verrouiller la barre dans sa position longitudinale et/ou transversale.

Selon une autre configuration particulière de l'invention, les moyens de verrouillage manuellement actionnables comprennent un premier et un deuxième organes de manœuvre saisissables avec les doigts d'une main, ledit premier, respectivement deuxième, organe de manœuvre étant connecté de manière rotative sur le premier, respectivement deuxième, segment d'extrémité et étant solidaire d'un organe mâle fileté, ledit organe mâle fileté étant apte à être vissé à l'intérieur d'un premier, respectivement deuxième, trou fileté formé à l'intérieur du segment central lorsque la barre est dans sa position transversale et lorsque le premier, respectivement deuxième, organe de manœuvre est tourné de manière adéquate, verrouillant ainsi la barre dans sa position transversale.

Selon une autre configuration particulière de l'invention, l'organe mâle fileté qui est solidaire du deuxième organe de manœuvre est apte à être vissé à l'intérieur d'un trou fileté formé à l'intérieur du premier rail support lorsque la barre est dans sa position longitudinale et lorsque le deuxième organe de manœuvre est tourné de manière adéquate, verrouillant ainsi la barre dans sa position longitudinale.

Selon une autre configuration particulière de l'invention, les moyens de verrouillage manuellement actionnables comprennent une tige disposée de manière coulissante à l'intérieur d'un logement tubulaire du segment central, ladite tige possédant une première extrémité connectée de manière pivotante sur le premier segment d'extrémité et une deuxième extrémité munie d'un filetage externe, et un organe de manœuvre saisissable avec les doigts d'une main, ledit organe de manœuvre étant connecté de manière rotative sur le deuxième segment d'extrémité et étant solidaire d'un organe femelle fileté, ledit organe femelle fileté étant apte à être vissé sur l'extrémité filetée de la tige lorsque la barre est dans sa position transversale et lorsque l'organe de manœuvre est tourné de manière adéquate, verrouillant ainsi la barre dans sa position transversale.

Selon une autre configuration particulière de l'invention, l'organe femelle fileté est apte à être vissé sur un organe mâle fileté, notamment une vis, monté sur le premier rail support lorsque la barre est dans sa position longitudinale et lorsque l'organe de manœuvre est tourné de manière adéquate, verrouillant ainsi la barre dans sa position longitudinale.

Selon une autre configuration particulière de l'invention, l'organe mâle fileté est monté de manière pivotante sur le premier rail support de telle sorte à pouvoir pivoter entre une position rabattue, dans laquelle il est logé à l'intérieur d'une cavité débouchant sur une face supérieure du premier rail support, et une position déployée, dans laquelle il dépasse de ladite face supérieure et est aligné avec l'organe femelle fileté lorsque la barre est dans sa position longitudinale.

Selon une autre configuration particulière de l'invention, chaque organe de manœuvre comprend des moyens de blocage destinés à empêcher la rotation de l'organe de manœuvre.

Selon une autre configuration particulière de l'invention, chaque organe de manœuvre comprend un corps sensiblement cylindrique, ledit corps possédant un bord périphérique pouvant être saisi manuellement, un logement central apte à loger l'organe fileté, mâle ou femelle, et un logement périphérique entourant ledit logement central, ledit logement périphérique étant apte à loger un organe de guidage sensiblement tubulaire formé en saillie le long d'une face externe du premier ou deuxième élément segment d'extrémité, ledit organe de manœuvre étant apte à coulisser le long dudit organe de guidage entre une position distale, dans laquelle il est libre de tourner autour dudit organe de guidage, et une position proximale, dans laquelle les moyens de blocage sont aptes à empêcher sa rotation autour dudit organe de guidage.

Selon une autre configuration particulière de l'invention, les moyens de blocage comprennent un organe de blocage sensiblement annulaire et élastiquement déformable entre une position non déformée et une position déformée, ledit organe de blocage possédant une ouverture centrale apte à loger au moins partiellement l'organe de guidage lorsqu'il est monté sur le corps de l'organe de manœuvre, ladite ouverture centrale possédant au moins une zone plus étroite apte à loger une zone amincie de l'organe de guidage, lorsque l'organe de blocage est dans sa position non déformée et lorsque l'organe de manœuvre est dans sa position proximale, et à loger une zone non amincie de l'organe de guidage, lorsque l'organe de blocage est dans sa position déformée et lorsque l'organe de manœuvre est dans sa position proximale.

Selon une autre configuration particulière de l'invention, l'organe de blocage comprend au moins une paire d'organes d'appui disposés de manière diamétralement opposée le long du pourtour de l'organe de blocage, le passage de la position non déformée à la position déformée s'effectuant par un appui simultané sur lesdits organes d'appui.

Selon une autre configuration particulière de l'invention, la zone plus étroite est formée par une saillie en forme de dent dépassant à l'intérieur de l'ouverture centrale de l'organe de blocage et la zone amincie est formée par une rainure formée le long d'un bord périphérique de l'organe de guidage.

Selon une autre configuration particulière de l'invention, le deuxième segment d'extrémité possède une extrémité inférieure en forme de T inversé apte à coopérer par liaison glissière avec une encoche formée dans le deuxième rail support de manière à fixer de manière démontable la barre sur le deuxième rail support lorsque la barre est dans sa position transversale.

Selon une autre configuration particulière de l'invention, chaque rail support comprend une partie évidée apte à loger la barre lorsque la barre est dans sa position longitudinale.

D'autres caractéristiques et avantages de la présente invention ressortiront clairement de la description détaillée ci-après de deux modes de réalisation de l'invention donnés à titre d'exemples non limitatifs, en référence aux dessins annexés, dans lesquels :
- La figure 1 est une vue en perspective d'un ensemble de barres de toit selon une première variante de réalisation de l'invention, les barres étant dans leur position longitudinale ;
- La figure 2 est une vue en perspective de l'ensemble de barres de toit représenté sur la figure 1, les barres étant dans leur position transversale ;
- La figure 3 est une vue de côté d'une des barres de l'ensemble représenté sur la figure 1 ;
- Les figures 3a et 3b sont des vues agrandies des zones A et B de la figure 3 ;
- La figure 4a est une vue en coupe transversale de la barre telle que représentée sur la figure 3a ;
- Les figures 4b et 4c sont des vues en perspective du rail support au niveau de la zone A de la figure 3, selon deux positions intermédiaires de la barre entre sa position longitudinale et sa position transversale ;
- La figure 5a est une vue agrandie de la zone A' de la figure 2 ;
- La figure 5b est une vue en perspective partiellement éclatée du segment d'extrémité et du rail support représentés sur la figure 5a ;
- Les figures 5c et 5d sont des vues en perspective et de dessous de la zone A' de la figure 2, respectivement durant et après la connexion du segment d'extrémité sur le rail support ;
- La figure 6a est une vue agrandie de la zone B' de la figure 2 ;
- La figure 6b est une vue en perspective du segment d'extrémité représenté sur la figure 6a ;
- La figure 6c est une vue en perspective éclatée de la partie basse du segment d'extrémité représenté sur la figure 6b ;
- La figure 6d est une vue en perspective éclatée de la partie haute du segment d'extrémité représenté sur la figure 6b ;
- La figure 6e est une vue en coupe transversale de la zone B' de la figure 2 ;
- Les figures 7a-7d sont des vues en perspective de la zone B' de la figure 2 selon plusieurs positions successives de la barre, durant son déplacement d'une première position transversale à une deuxième position transversale ;
- La figure 8 est une vue agrandie et en éclatée de la zone C' de la figure 2 ;
- La figure 8a est une vue en perspective de l'organe de manœuvre représenté sur la figure 8, dans sa forme montée ;
- La figure 8b est une vue agrandie de l'organe de guidage représenté sur la figure 8 ;
- La figure 8c est une vue de face de l'organe de blocage représenté sur la figure 8;
- La figure 9 est une vue schématique et en coupe d'un ensemble de barres de toit selon une deuxième variante de réalisation, les barres étant dans leur position transversale.

Dans le présent texte, le terme « longitudinal » fait référence à une direction parallèle au sens de la longueur du véhicule et le terme « transversal » fait référence à une direction parallèle au sens de la largeur du véhicule. En outre, les termes « avant », « arrière » et « latéral » sont utilisés relativement au sens de la marche du véhicule. Le terme « horizontal » fait référence à une direction ou une surface parallèle au sol lorsque les roues du véhicule sont en contact avec le sol et le terme « vertical » fait référence à une direction ou une surface perpendiculaire au sol lorsque les roues du véhicule sont en contact avec le sol. Les termes « inférieur » et « supérieur », ou « bas » et « haut » font référence à des positions relatives dans le sens vertical. Les expressions « orienté vers intérieur » et « orienté vers l'extérieur » font référence à des orientations respectivement dirigées vers le centre du véhicule et s'éloignant du centre du véhicule.

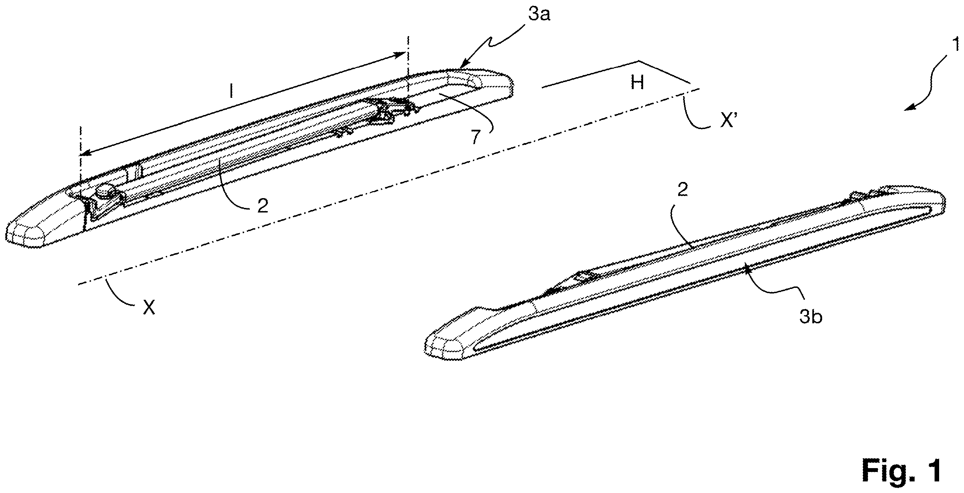

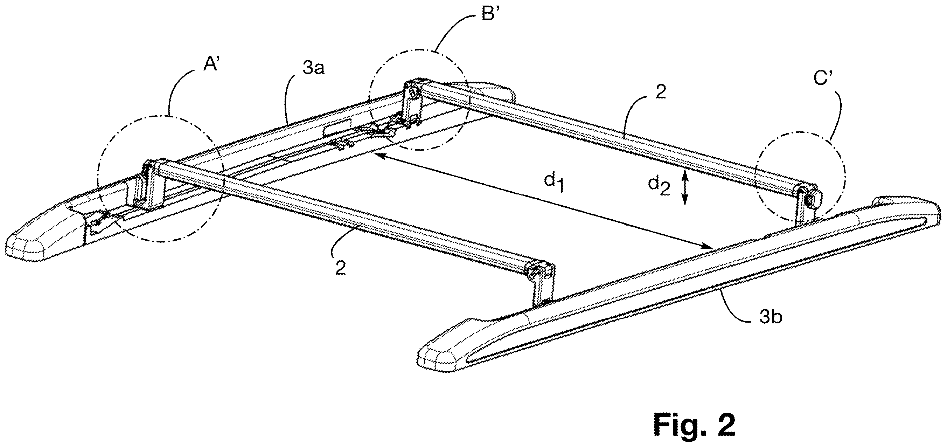

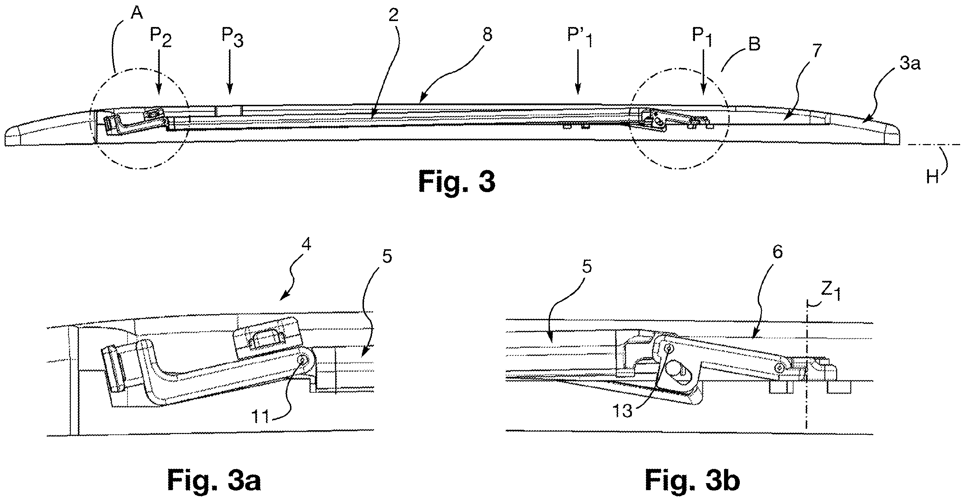

En référence aux figures 1 et 2, il est représenté un ensemble 1 de barres de toit selon une première variante de réalisation de l'invention, les barres de toit 2 étant respectivement dans une position longitudinale et transversale. Comme illustré sur les figures 3a et 3b, chaque barre de toit 2 comprend trois parties distinctes : deux segments d'extrémité 4 et 6 qui comprennent chacun une extrémité de la barre et un segment central 5 situé entre les deux segments d'extrémité 4, 6. Les différents segments 4 à 6 sont articulés entre eux, les segments d'extrémité 4, 6 étant reliés au segment central 5 par une liaison pivot, respectivement d'axe 11 et 13 de façon à permettre le rapprochement ou l'éloignement des deux extrémités de la barre entre elles. L'ensemble 1 comprend en outre deux rails support 3a, 3b disposés parallèlement à un même axe longitudinal XX' dans un plan horizontal H, lesdits rails support 3a, 3b étant destinés à être fixés sur le toit d'un véhicule, de chaque côté de celui-ci. Chaque rail support 3a, 3b est configuré pour permettre la fixation amovible des barres de toit 2, chaque barre 2 étant reliée de manière pivotante sur un des rails support 3a, 3b au niveau d'un premier point de fixation P1, tel que représenté sur la figure 3, de manière à être déplaçable entre la position longitudinale représentée sur la figure 1, dans laquelle les deux segments d'extrémité 4 et 6 sont dans le prolongement du segment central 5, et la position transversale représentée sur la figure 2, dans laquelle la barre 2 est repliée à ses extrémités et possède sensiblement une forme de U inversée. Dans cette dernière position, la distance d2 séparant le segment central 5 du plan H défini par les rails support 3a, 3b est plus grande que dans le cas où la barre est dans sa position longitudinale. Par ailleurs, chaque rail support 3a, 3b définit au moins deux autres points de fixation, respectivement un deuxième point de fixation P2 et un troisième point de fixation P3, le deuxième point de fixation P2 permettant la fixation amovible d'une des barres dans sa position longitudinale et le troisième point de fixation P3 permettant la fixation amovible de l'autre barre dans sa position transversale. Les rails support 3a, 3b sont séparés l'un de l'autre dans le sens transversal, la distance d1 séparant les rails support 3a, 3b étant inférieure à la longueur totale I des barres 2 lorsqu'elles sont totalement dépliées. Ainsi, lorsque les barres 2 passent de leur position longitudinale à leur position transversale, les segments d'extrémité 4 et 6 doivent être repliés vers le bas pour permettre leur fixation respective sur chacun des rails support 3a, 3b. Dans le cas de la barre représentée sur la figure 3, le segment d'extrémité 6 est relié de manière pivotante et non détachable au rail support 3a, tandis que le segment d'extrémité 4 est fixé de manière détachable au rail support 3a au niveau du point de fixation P2, lorsque la barre 2 est positionnée longitudinalement, et au rail support 3b au niveau du point de fixation P3, lorsque la barre 2 est positionnée transversalement. Comme illustré sur la figure 3, le point de fixation P1 est plus éloigné du point de fixation P2 que du point de fixation P3.

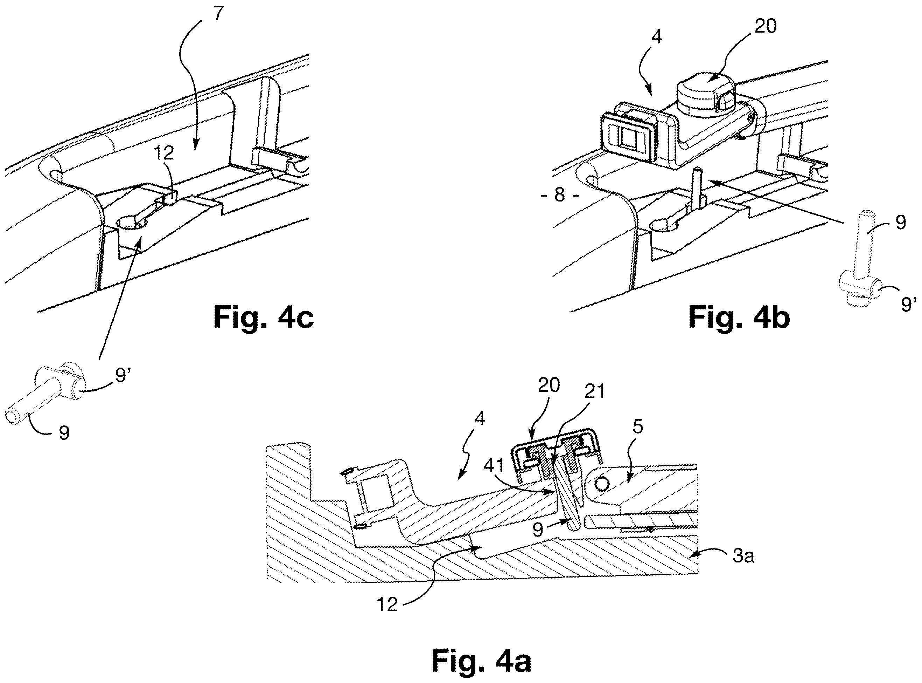

Dans leur position longitudinale représentée sur les figures 1 et 3, chaque barre de toit 2 est alignée avec un rail support 3a, 3b et est logée à l'intérieur d'un évidemment central 7 dudit rail support 3a, 3b de telle sorte qu'elle ne dépasse pas au-dessus de la surface supérieure 8 dudit rail support, comme illustré sur la figure 3. Cette position longitudinale correspond à une position de stockage ou de non-fonctionnement de ladite barre 2. Dans cette position, la barre de toit 2 n'est pas configurée pour supporter un coffre de toit ou un porte-vélo. Comme expliqué en détail dans la suite du texte au regard des figures 4a à 4c, chaque barre de toit 2 est avantageusement fixée sur le rail support 3a, 3b dans cette position de stockage de manière à éviter qu'elle ne bouge durant le déplacement du véhicule. Dans cette position, les barres 2 ne sont pas visibles de l'extérieur du véhicule puisque intégrées à l'intérieur des rails support 3a, 3b.

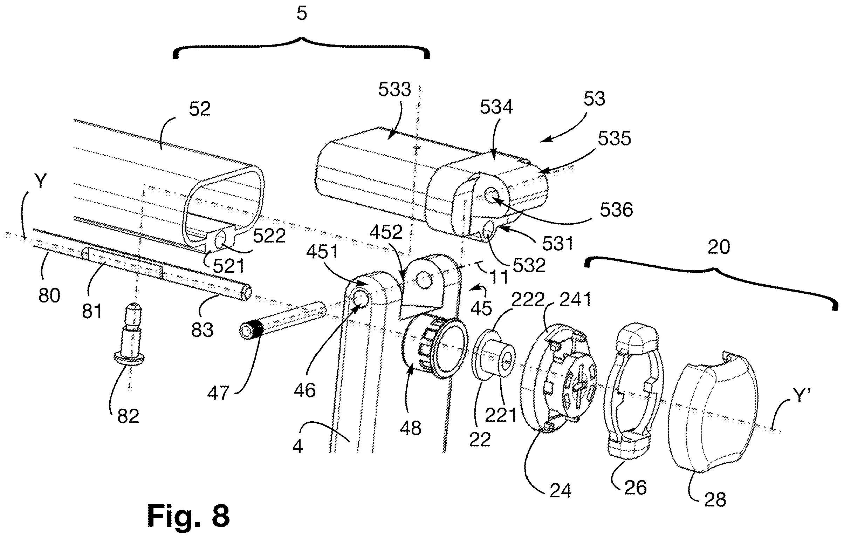

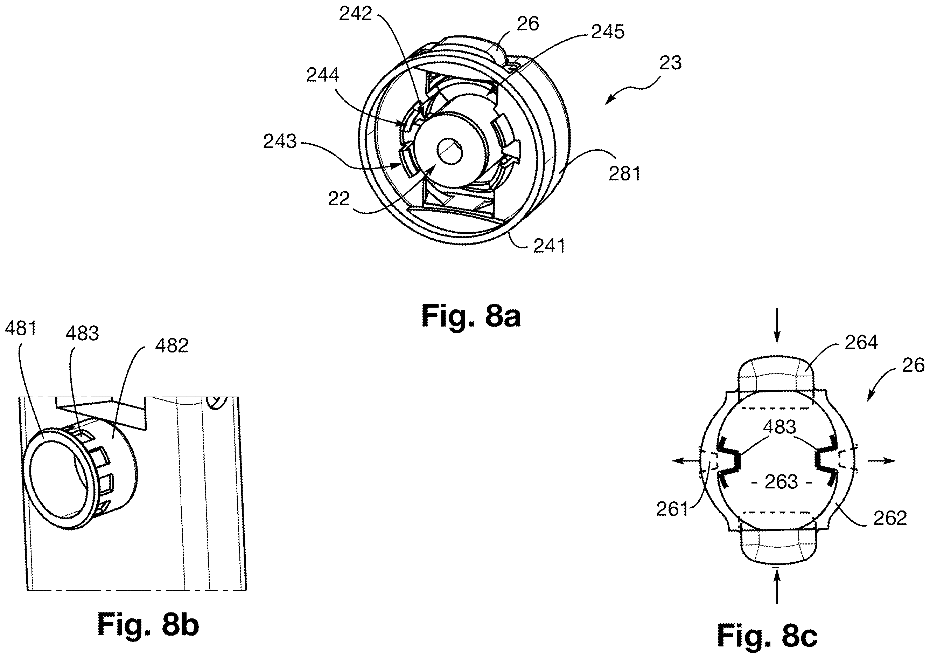

En référence à la figure 4a, il est représenté la portion du rail support 3a lorsque le segment d'extrémité 4 est fixé sur le rail support 4 au niveau du point de fixation P2. Dans la configuration représentée, la fixation s'opère au moyen d'une vis 9 montée sur un écrou cylindrique 9', ledit écrou 9' pouvant pivoter par rapport au rail support 3a de manière à déplacer la vis 9 depuis la position représentée sur les figures 4a et 4b, dite position déployée, dans laquelle elle est disposée en saillie à l'intérieur de l'évidemment 7 et sensiblement perpendiculairement au plan H, jusqu'à la position représentée sur la figure 4c, dite position rabattue, dans laquelle elle est logée entièrement à l'intérieur d'une rainure 12 du rail support 3a débouchant sur l'évidemment 7. Dans sa position déployée, la vis 9 est susceptible d'être alignée avec un trou traversant 41 formé à l'intérieur du segment d'extrémité 4 lorsque la barre 2 est dans sa position longitudinale de telle sorte que, une fois introduite dans le trou 41, elle puisse coopérer avec un filetage interne 21 formée à l'intérieur d'un bouton de manœuvre 20 connecté sur le segment d'extrémité 4, ledit bouton de manœuvre 20 pouvant être tourné de manière adéquate de manière à fixer le segment d'extrémité 4 sur la vis 9. Ledit bouton de manœuvre 20 sera décrit plus en détail dans la suite du texte au regard des figures 8 et 8a à 8c.

En référence à la figure 4b, il est représenté la barre 2 dans une première position intermédiaire entre sa position longitudinale et sa position transversale. Dans cette position, le segment d'extrémité 4 est déconnecté de la vis 9 et est positionné légèrement au-dessus de la surface supérieure 8 du rail support 3a. La vis 9 est dans sa position déployée.

En référence à la figure 4c, il est représenté le rail support 3a, une fois que la barre 2 a commencé à pivoter autour de l'axe vertical Z1 défini par le point de fixation P1, comme indiqué sur la figure 3b, jusqu'à atteindre sa position transversale. La vis 9 a été rabattue dans la rainure 12 de manière à éviter qu'une personne ne se blesse au contact de la vis.

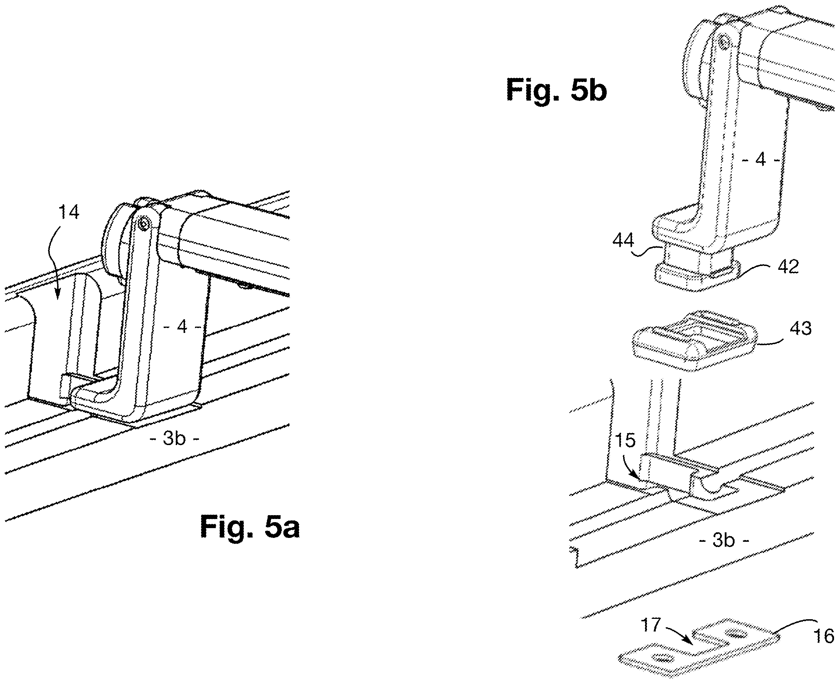

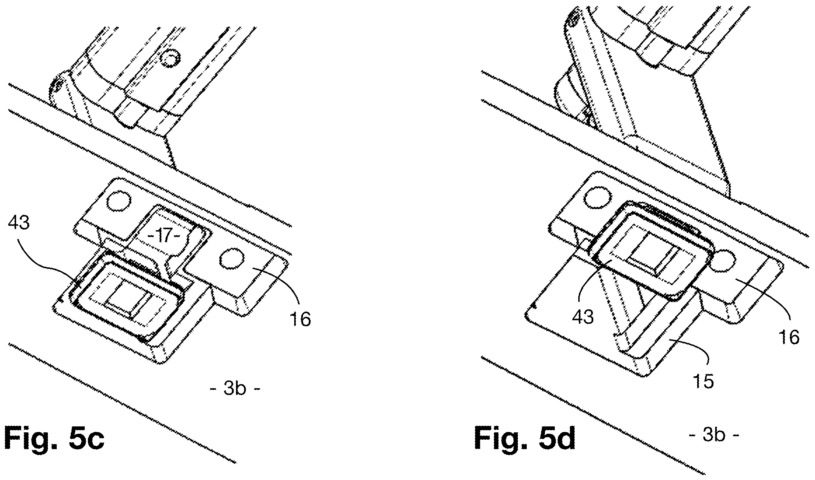

En référence à la figure 5a, il est représenté le segment d'extrémité 4 une fois qu'il a été connecté au rail support 3b, la barre 2 étant dans sa position transversale. Comme illustré en détail sur les figures 5b à 5d, cette connexion s'opère par liaison glissière entre une extrémité inférieure 42, en forme de T inversé, du segment d'extrémité 4 avec une plaquette de retenue 16 fixée sur le rail support 3b au niveau du point de fixation P3. La plaquette de retenue 16 comprend une encoche centrale 17 sensiblement rectangulaire, ladite encoche 17 possédant un profil sensiblement complémentaire à celui d'un pied de liaison 44 de l'extrémité inférieure 42 de telle sorte que le pied de liaison 44 vient coulisser sans jeu à l'intérieur de l'encoche 17 lorsque le segment d'extrémité 4 passe de la position pré-engagée représentée sur la figure 5c à la position totalement engagée représentée sur la figure 5d. Durant ce transfert, une semelle protectrice 43 en matériau élastomère recouvrant la partie basse de l'extrémité inférieure 42 coulisse d'abord à l'intérieur d'une découpe verticale 14 du rail support 3b jusqu'à ce que le pied de liaison 44 soit aligné avec l'encoche 17, puis coulisse à l'intérieur d'une découpe horizontale 15 du rail support 3b jusqu'à être positionné sous la plaquette de retenue 16.

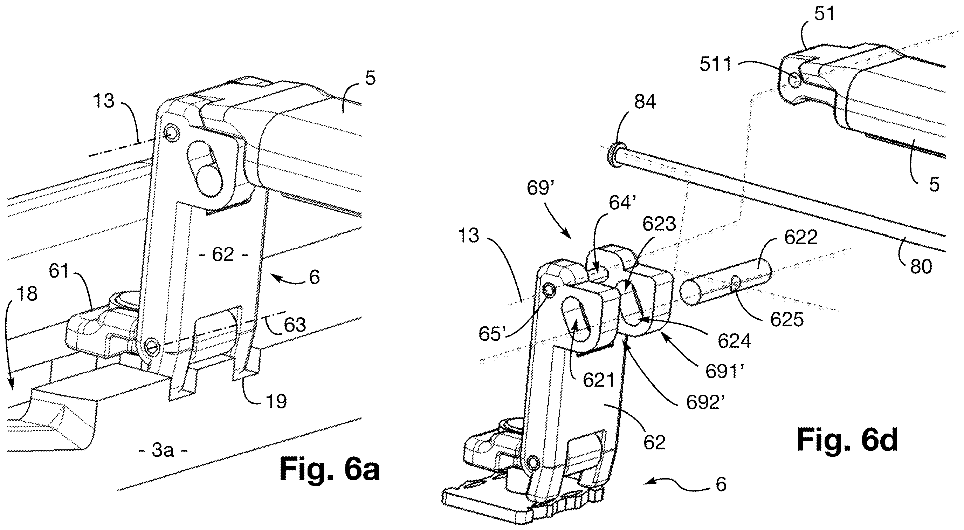

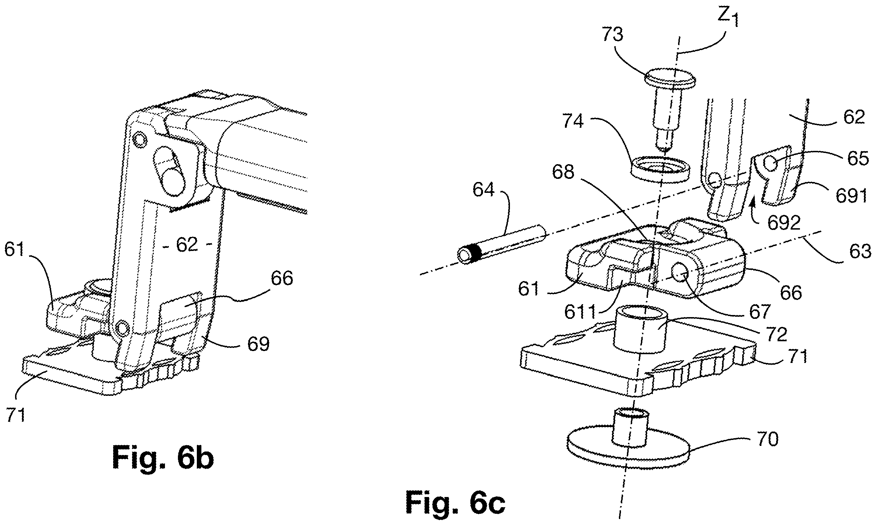

En référence à la figure 6a, il est représenté le segment d'extrémité 6 lorsque la barre 2 est dans sa position transversale. Comme illustré en détail sur les figures 6b et 6c, le segment d'extrémité 6 possède une structure articulée formée notamment d'un premier élément 61 sensiblement plat et d'un deuxième élément 62 sensiblement plat, lesdits premier et deuxième éléments 61, 62 pivotant l'un par rapport à l'autre autour d'un axe horizontal 63. Dans la position transversale de la barre 2, le premier élément 61 est ainsi sensiblement perpendiculaire au deuxième élément 62, alors que, dans la position longitudinale de la barre 2, le premier élément 61 est sensiblement aligné ou légèrement incliné avec le deuxième élément 62, comme représenté sur la figure 3b. La liaison pivot entre le premier et le deuxième éléments 61, 62 est assurée par une goupille cylindrique 64 possédant une extrémité moletée, ladite goupille 64 étant introduite dans des alésages 65 et 67 formés respectivement à travers une extrémité inférieure 69 du deuxième élément 62 et une extrémité 66 du premier élément 61 qui est orientée vers l'intérieur dans la position transversale de la barre 2, ladite extrémité 66 étant dimensionnée de telle sorte à venir presque s'emboîter à l'intérieur d'une découpe centrale 692 de l'extrémité 69, entre deux bras latéraux 691 bordant ladite découpe 692. La goupille 64 pourra être fixée à l'intérieur des alésages 65 par friction. Par ailleurs, un ressort de type spirale pourra avantageusement être disposé entre la goupille 64 et l'alésage 67 de manière à ramener de manière automatique les premier et deuxième éléments 61, 62 dans leur configuration alignée, facilitant ainsi le transfert de la barre 2 de sa position transversale à sa position longitudinale.

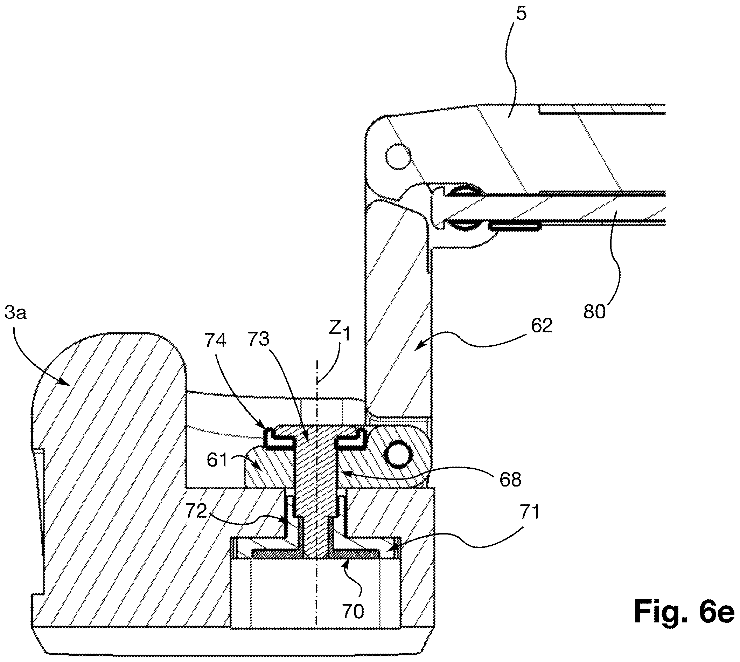

Comme illustré sur les figures 6c et 6e, le premier élément 61 est muni d'un alésage central 68 logeant une saillie tubulaire 72 d'une entretoise 71 disposée sous le premier élément 61, ladite saillie 72 définissant l'axe Z1 autour duquel pivote la barre 2. Le premier élément 61 et l'entretoise 71 sont reliés ensemble au moyen d'une liaison vis 73-écrou 70, les parties filetées de la vis 73 et de l'écrou 70 étant logées à l'intérieur de la saillie tubulaire 72 et une rondelle 74 de séparation étant disposée entre la tête de la vis 73 et la surface supérieure du premier élément 61. Ainsi configurée, l'entretoise 71 est avantageusement positionnée sous le premier élément 61 et à une certaine distance de celui-ci. Cet espace de séparation permet de positionner l'ensemble formé par le premier élément 61 et l'entretoise 71 à cheval sur le rail support 3a, la saillie tubulaire 72 pouvant circuler à l'intérieur d'une fente 18 formée le long du rail support 3a, comme illustré sur la figure 6a, permettant ainsi, lorsque la barre 2 est orientée transversalement, un déplacement de ladite barre 2 du point de fixation P1 à un point de fixation P1', qui est plus proche du point de fixation P3, comme illustré sur la figure 3. Ce déplacement pourra être envisagé de manière à mieux équilibrer la charge sur le toit du véhicule par exemple.

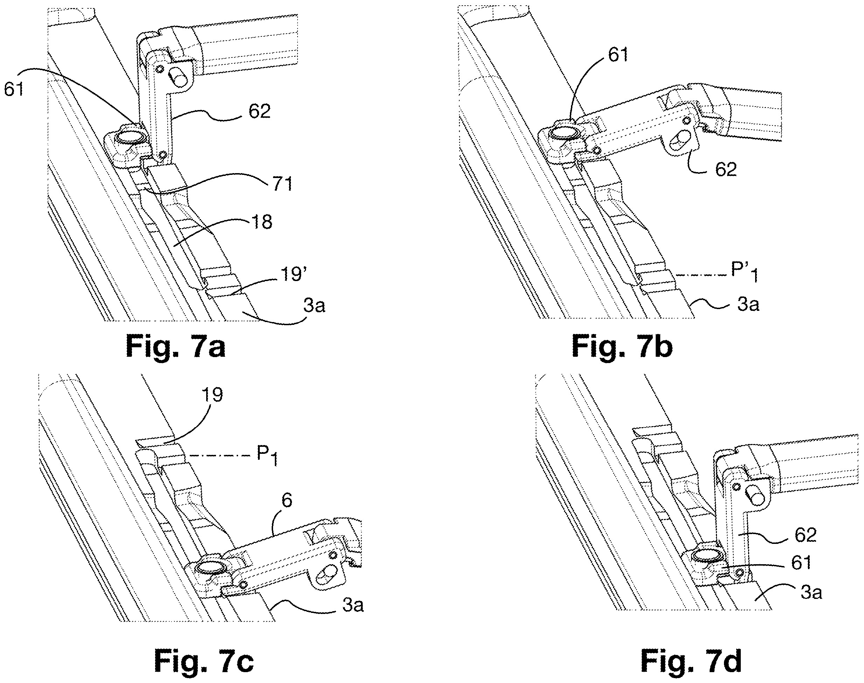

En référence aux figures 7a à 7d, il est représenté les étapes successives permettant de déplacer la barre 2 d'une position où elle est alignée avec le point de fixation P1 à une position où elle est alignée avec le point de fixation P1'. Sur la figure 7a, la barre 2 est alignée avec le point de fixation P1, les premier et deuxième éléments 61, 62 du segment d'extrémité 6 étant sensiblement perpendiculaires. Dans cette position, les bras latéraux 691 de l'extrémité 69 du deuxième élément 62 dépasse de la surface inférieure du premier élément 61 et sont disposés à l'intérieur de deux rainures transversales 19 formées au niveau de la surface supérieure du rail support 3a. La profondeur de chaque rainure 19 sera avantageusement choisie de manière à permettre un maintien des bras latéraux 691 par friction contre le fond des rainures 19. Sur la figure 7b, le deuxième élément 62 a pivoté autour de l'axe 63 de telle sorte qu'il est désormais sensiblement aligné avec le premier élément 61. Les bras latéraux 691 sont ainsi positionnés au-dessus du rail support 3a, une découpe 611 formée sous le premier élément 61 (voir figure 6c) permettant de loger partiellement lesdits bras latéraux 691. Sur la figure 7c, la barre 2 s'est déplacée le long du rail support 3a jusqu'à atteindre le point de fixation P1', le deuxième élément 62 étant toujours sensiblement aligné avec le premier élément 61 et les bras latéraux 691 étant alignés avec une autre paire de rainures transversales 19' du rail support 3a. Sur la figure 7d, le deuxième élément 62 a pivoté autour de l'axe 63 de telle sorte qu'il est désormais sensiblement perpendiculaire au premier élément 61, les bras latéraux 691 étant disposés à l'intérieur des rainures 19'.

En référence à la figure 6d, il est représenté en détail les pièces constitutives permettant de relier le segment central 5 au segment d'extrémité 6. Ainsi, l'extrémité supérieure 69' du deuxième élément 62 présente une forme fourchue formée de deux bras latéraux 691' séparés par une découpe centrale 692', chaque bras latéral 691' étant muni d'un alésage 65' apte à loger par friction une des extrémités d'une goupille 64'. La goupille 64' est logée par ailleurs dans un alésage 511 d'une première partie d'extrémité 51 du segment central 5 qui est disposée entre les bras latéraux 691', permettant ainsi au segment central 5 de pivoter autour de l'axe 13 défini par la goupille 64'. Chaque bras latéral 691' est par ailleurs muni d'une découpe oblongue 621, possédant une extrémité supérieure 623 et une extrémité inférieure 624, à l'intérieur de laquelle est disposée de manière coulissante une des extrémités d'une goupille cylindrique 622, ladite goupille 622 étant orientée parallèlement à l'axe 13. La goupille 622 est en outre munie d'un trou traversant 625 le long duquel coulisse une tige 80. Comme expliqué en détail dans la suite du texte au regard de la figure 8, la tige 80, étant partiellement logée à l'intérieur du segment central 5, ne permettrait pas le pivotement du segment central 5 autour de l'axe 13 si la goupille 622 était fixe par rapport au deuxième élément 62. Ainsi, lors du pivotement du deuxième élément 62 autour de l'axe 63, notamment lors du changement de position de la barre 2 illustré sur les figures 7a à 7d, la goupille 622 coulisse à l'intérieur de la découpe oblongue 621, par exemple de l'extrémité inférieure 624 jusqu'à l'extrémité 623 lors du passage de la barre 2 de sa configuration représentée sur la figure 7a à sa configuration représentée sur la figure 7b, de manière à permettre le pivotement du segment central 5 autour de l'axe 13.

En référence à la figure 8, il est représenté en détail les pièces constitutives permettant de relier le segment central 5 au segment d'extrémité 4. Le segment central 5 possède une deuxième partie d'extrémité 53, opposée à la première partie d'extrémité 51, lesdites parties 51 et 53 étant emboitées à chacune des extrémités d'une partie centrale 52 sensiblement tubulaire. Etant donné que la partie centrale 52 forme le support contre lequel seront attachées les charges à transporter par le véhicule, elle sera de préférence constituée d'un matériau métallique. La deuxième partie d'extrémité 53 présente deux sections adjacentes 533 et 534, la section 533 possédant un profil externe complémentaire du profil interne de la partie centrale 52 de telle sorte qu'elle puisse s'emboîter à l'intérieur de la partie centrale 52, et la section 534 définissant avec ladite section 533 un épaulement contre lequel vient buter la partie centrale 52 lorsque les parties 52 et 53 sont emboitées l'une dans l'autre. Une extrémité 535 de la section 534, qui est orientée vers l'extérieur dans la position transversale de la barre 2, est dimensionnée de telle sorte à venir presque s'emboîter à l'intérieur d'une découpe centrale 452 de l'extrémité supérieure 45 du segment d'extrémité 4, entre deux bras latéraux 451 bordant ladite découpe 452. La liaison pivot entre le segment central 5 et le segment d'extrémité 4 autour de l'axe 11 est assurée par une goupille cylindrique 47 possédant une extrémité moletée, ladite goupille 47 étant introduite dans des alésages 46 et 536 formés respectivement à travers une l'extrémité supérieure 45 du segment d'extrémité 4 et l'extrémité 535 de la section 534. La goupille 47 pourra être fixée à l'intérieur des alésages 46 par friction. La partie centrale 52 et la section 534 comportent par ailleurs, le long de leur pourtour inférieur, des zones, respectivement 521 et 531, possédant une épaisseur accrue, lesdites zones 521 et 531 étant évidées sur toute leur longueur de manière à définir des cavités tubulaires, respectivement 522 et 532, alignées l'une sur l'autre et jointives lorsque la partie d'extrémité 53 est emboîtée dans la partie centrale 52. Lesdites cavités 522 et 532 sont dimensionnées de manière à pouvoir loger la tige 80 à l'intérieur. La tige 80 possède en outre un méplat 811e long de son pourtour, ledit méplat 81 étant apte à coopérer avec une vis 82 débouchant à l'intérieur de la partie centrale 52 de telle sorte que la partie filetée de la vis 82 jouxte ledit méplat 81 et empêche une rotation de la tige 80 à l'intérieur de la cavité 522. L'extrémité libre 83 de la tige 80 est avantageusement filetée de manière à pouvoir se visser à l'intérieur du filetage interne 21 du bouton de manœuvre 20 (voir figure 4a) lorsque la barre 2 est dans sa position transversale, la barre 2 étant verrouillée dans cette position lorsque le bouton de manœuvre 20 est tourné autour d'un axe YY', perpendiculaire à l'axe XX', de manière à déplacer l'extrémité libre 83 vers l'extérieur. En effet, lorsque l'extrémité 83 se déplace vers l'extérieur, l'extrémité opposée 84 de la tige 80, qui possède un rebord annulaire 84 en appui sur la goupille 622, entraine cette dernière dans son déplacement, ce qui tend à rapprocher le segment d'extrémité 6 du segment d'extrémité 4.

La structure et le fonctionnement du bouton de manœuvre 20 sera mieux compris à l'aide des figures 8 et 8a à 8c.

Le bouton de manœuvre 20 comprend en particulier un corps 23 sensiblement cylindrique, ledit corps 23 étant formé d'une première coque 24 et d'une deuxième coque 28 s'emboîtant l'une dans l'autre, lesdites coques 24, 28 définissant un espace interne dans lequel vient se loger un organe déformable 26 de forme sensiblement annulaire. La première coque 24 possède un bord périphérique 241 destiné à être saisi par les doigts d'un utilisateur, ledit bord périphérique 241 étant sensiblement jointif avec un bord périphérique 281 de la coque 28, dans la configuration montée du corps 23 représentée sur la figure 8a. Une douille 22 comportant une partie cylindrique 221 munie d'un filetage interne 21 et un rebord annulaire 222 est solidarisée, par exemple par sertissage ou surmoulage, à la première coque 24, ladite partie cylindrique 221 étant logée à l'intérieur d'une excroissance tubulaire 242 formée au centre de la première coque 24 et alignée avec la direction axiale YY'. Des pattes 243 de forme courbe et disposées coaxialement autour de l'excroissance tubulaire 242 définissent un logement périphérique entourant ladite excroissance 242, ledit logement périphérique étant apte à loger une embase 48 sensiblement tubulaire formée en saillie le long d'une face externe du segment d'extrémité 4. Comme illustré sur la figure 8b, l'embase 48 possède sur son extrémité libre un rebord annulaire 481 contre lequel vient se clipper les pattes 243, le bouton de manœuvre 20 pouvant coulisser le long de l'embase 48 entre une position distale, dans laquelle des saillies radiales 244 formées aux extrémités libres des pattes 243 butent contre le rebord annulaire 481, le bord périphérique 482 de l'embase 48 n'étant pas recouvert par le bouton de manœuvre 20, et une position proximale, dans laquelle ledit rebord annulaire 481 bute contre une paroi de fond 245 définie par la première coque 24, le bord périphérique 482 de l'embase 48 étant presque totalement recouvert par le bouton de manœuvre 20. Ainsi, lorsque le bouton de manœuvre 20 est dans sa position distale, l'extrémité filetée 83 de la tige 80 est éloignée de la partie filetée 21 de la douille 22 : la barre 2 n'est donc pas encore verrouillée en position transversale. En revanche, lorsque le bouton de manœuvre 20 est dans sa position proximale, l'extrémité filetée 83 de la tige 80 est correctement positionnée pour coopérer avec la partie filetée 21 de la douille 22 : la barre 2 peut donc être verrouillée en position transversale. Dans cette position proximale, au moins une paire de rainures parmi une pluralité de rainures 483 formées le long d'un bord périphérique 482 de l'embase 48 est alignée avec une paire de saillies 261 en forme de dent dépassant radialement à l'intérieur de l'ouverture centrale 263 définie par le bord annulaire 262 de l'organe déformable 26, lesdites saillies 261 se faisant face. Des ergots 264 protubérant vers l'extérieur du bord annulaire 262 et disposés sensiblement à angle droit par rapport aux saillies 261 dépassent du corps 23, comme illustré sur la figure 8a, de telle sorte qu'en appuyant simultanément sur lesdits ergots 264, il se produit une déformation de l'organe déformable 26 tendant à éloigner les saillies 261 l'une de l'autre, comme représenté en lignes pointillées sur la figure 8c, ce qui libère l'espace interne des rainures 483. Le bouton de manœuvre 20 pourra donc tourner autour de l'axe YY', et permettre ainsi le vissage de la tige 80 à l'intérieur de la douille 22, verrouillant la barre 2 dans sa position transversale. Une fois la barre 2 verrouillée dans sa position transversale, l'utilisateur pourra relâcher la pression exercée sur les ergots 264 ce qui ramènera automatiquement l'organe déformable 26 dans sa position d'origine du fait de l'élasticité du matériau constituant ledit organe 26. Les saillies 261 seront donc positionnées à nouveau dans les rainures 483, ce qui empêchera toute rotation du bouton de manœuvre 20 autour de l'axe YY', évitant ainsi un déverrouillage accidentel de la barre 2.

Le mode de réalisation représenté sur les figures 1 à 8 et décrit ci-dessus n'est évidemment donné qu'à titre d'exemple. Des modifications sont envisageables, notamment du point de vue de la constitution ou la forme des divers éléments ou par la substitution d'équivalents techniques, sans sortir pour autant du domaine de protection de l'invention.

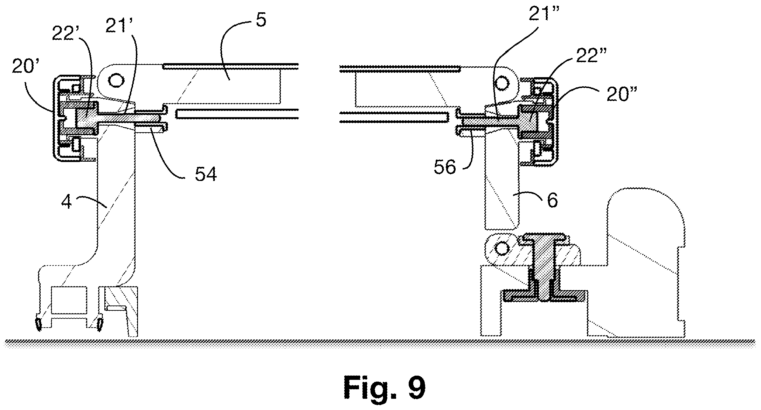

En particulier, dans un autre mode de réalisation de l'invention, représenté sur la figure 9, le bouton de manœuvre 20' pourra comporter une vis 22' en lieu et place de la douille 22, la tige filetée 21' de la vis 22' coopérant alors avec une partie filetée 54 formée à l'intérieur du segment central 5. Dans ce mode de réalisation, la tige 80 n'est donc plus utilisée, ce qui induit d'autres modifications de structure, notamment au niveau du segment d'extrémité 6. En particulier, l'extrémité supérieure 69' du segment d'extrémité 6 pourra avantageusement être configurée de manière sensiblement identique à l'extrémité supérieure 45 du segment d'extrémité 4. Un bouton de manœuvre 20" munie d'une vis 22" pourra ainsi être disposé sur cette extrémité 69' de manière à ce que la tige filetée 21" de la vis 22" puisse coopérer avec une partie filetée 56 formée à l'intérieur du segment central 5. Le verrouillage, respectivement le déverrouillage, de la barre 2 dans sa position transversale s'opérera alors par rotation, de préférence simultanée, des deux boutons de manœuvre 20' et 20".

## Revendications

1. Ensemble (1) de barre de toit comprenant :
- une paire de rails support (3a, 3b), à savoir un premier rail support (3a) et un deuxième rail support (3b), destinés à être fixés de chaque côté d'un toit de véhicule, chaque rail support (3a, 3b) étant parallèle à un axe longitudinal (XX') défini par le véhicule, lesdits rails support (3a, 3b) étant alignés dans un plan (H) sensiblement horizontal,
- au moins une barre (2), possédant un segment central (5) et une paire de segments d'extrémité (4, 6), à savoir un premier segment d'extrémité (6) et un deuxième segment d'extrémité (4),
dans lequel le premier segment d'extrémité (6) est relié de manière pivotante au premier rail support (3a) de manière à permettre le positionnement de la barre (2) selon deux positions d'utilisation spécifiques, respectivement une position longitudinale, dans laquelle le segment central (5) est sensiblement parallèle audit axe longitudinal (XX'), et une position transversale, dans laquelle le segment central (5) est orienté sensiblement perpendiculairement audit axe longitudinal (XX'), et
dans lequel le deuxième segment d'extrémité (4) est apte à être fixé de manière manuellement démontable sur le premier rail support (3a), lorsque la barre (2) est dans sa position longitudinale, et sur le deuxième rail support (3b), lorsque la barre (2) est dans sa position transversale,
**caractérisé en ce que** le premier segment d'extrémité (6) et le deuxième segment d'extrémité (4) sont reliés de manière pivotante aux extrémités opposées dudit segment central (5), et
**en ce que** la longueur (I) de la barre (2) dans sa position longitudinale est supérieure à la distance (d1) séparant les rails support (3a, 3b) de telle sorte que la distance (d2) séparant le segment central (5) du plan (H) défini par les rails support (3a, 3b) est plus grande lorsque la barre (2) est dans sa position transversale que lorsque la barre (2) est dans sa position longitudinale.

2. Ensemble (1) de barre de toit selon la revendication 1, **caractérisé en ce que** chacun des rails support (3a, 3b) comprend au moins un premier point de fixation (P1), sur lequel peut venir se fixer le premier segment d'extrémité (6), au moins un deuxième point de fixation (P2), sur lequel peut venir se fixer le deuxième segment d'extrémité (4) lorsque la barre (2) est dans sa position longitudinale, et au moins un troisième point de fixation (P3), sur lequel peut venir se fixer le deuxième segment d'extrémité (4) lorsque la barre (2) est dans sa position transversale, la distance entre les premier et deuxième points de fixation (P1, P2) étant supérieure à la distance entre les premier et troisième points de fixation (P1, P3).

3. Ensemble (1) de barre de toit selon l'une des revendications précédentes, **caractérisé en ce que** le premier segment d'extrémité (6) comprend un premier élément (61) sensiblement plat et un deuxième élément (62) sensiblement plat, lesdits premier et deuxième éléments (61, 62) pivotant l'un par rapport à l'autre autour d'un premier axe horizontal (63), le premier élément (61) logeant un axe pivot (72) orienté verticalement autour duquel pivote le premier segment d'extrémité (6) et le deuxième élément (62) étant relié de manière pivotante au segment central (5) autour d'un deuxième axe horizontal (13).

4. Ensemble (1) de barre de toit selon la revendication 3, **caractérisé en ce que** le premier rail support (3a) est muni d'une fente (18) longitudinale le long de laquelle peut coulisser l'axe pivot (72), permettant ainsi un déplacement du premier segment d'extrémité (6) selon une direction parallèle à l'axe longitudinal (XX') lorsque la barre (2) est orientée perpendiculairement à l'axe longitudinal (XX') et lorsque le deuxième élément (62) est sensiblement aligné avec le premier élément (61) ou faiblement incliné par rapport au premier élément (61).

5. Ensemble (1) de barre de toit selon la revendication 3 ou la revendication 4, **caractérisé en ce que** le deuxième élément (62) comporte une extrémité (69) en forme de U, munie de deux ailes (691) espacées l'une de l'autre, entre lesquelles est disposé une extrémité (66) correspondante du premier élément (61), lesdites extrémités (66, 69) logeant au moins partiellement une goupille (64), alignée selon le premier axe horizontal (63).

6. Ensemble (1) de barre de toit selon la revendication 5, **caractérisé en ce que** chaque aile (691) est apte à être logée dans une découpe (611) correspondante du premier élément (61) lorsque le deuxième élément (62) est sensiblement aligné avec le premier élément (61) ou faiblement incliné par rapport au premier élément (61), et dans au moins une rainure (19), formée sur une face supérieure du premier rail support (3a) et orientée perpendiculairement à l'axe longitudinal (XX'), lorsque le deuxième élément (62) est perpendiculaire ou sensiblement perpendiculaire au premier élément (61).

7. Ensemble (1) de barre de toit selon la revendication 6, **caractérisé en ce que** chaque aile (691) est configurée pour venir s'appuyer en force contre une surface de fond de la rainure (19) lorsque le deuxième élément (62) est perpendiculaire ou sensiblement perpendiculaire au premier élément (61), maintenant ainsi la barre (2) dans sa position transversale.

8. Ensemble (1) de barre de toit selon l'une des revendications précédentes, **caractérisé en ce que** des moyens de verrouillage (20, 80; 20', 20", 54, 56) manuellement actionnables sont prévus pour permettre à un utilisateur de verrouiller la barre (2) dans sa position longitudinale et/ou transversale.

9. Ensemble (1) de barre de toit selon la revendication 8, **caractérisé en ce que** les moyens de verrouillage manuellement actionnables comprennent un premier et un deuxième organes de manœuvre (20', 20") saisissables avec les doigts d'une main, ledit premier, respectivement deuxième, organe de manœuvre (20', 20") étant connecté de manière rotative sur le premier, respectivement deuxième, segment d'extrémité (6, 4) et étant solidaire d'un organe mâle fileté (22', 22"), ledit organe mâle fileté (22', 22") étant apte à être vissé à l'intérieur d'un premier, respectivement deuxième, trou fileté (54, 56) formé à l'intérieur du segment central (5) lorsque la barre (2) est dans sa position transversale et lorsque le premier, respectivement deuxième, organe de manœuvre (20',20") est tourné de manière adéquate, verrouillant ainsi la barre (2) dans sa position transversale.

10. Ensemble (1) de barre de toit selon la revendication 9, **caractérisé en ce que** l'organe mâle fileté (22') qui est solidaire du deuxième organe de manœuvre (20') est apte à être vissé à l'intérieur d'un trou fileté formé à l'intérieur du premier rail support (3a) lorsque la barre (2) est dans sa position longitudinale et lorsque le deuxième organe de manœuvre (20') est tourné de manière adéquate, verrouillant ainsi la barre (2) dans sa position longitudinale.

11. Ensemble (1) de barre de toit selon la revendication 8, **caractérisé en ce que** les moyens de verrouillage manuellement actionnables comprennent une tige (80) disposée de manière coulissante à l'intérieur d'un logement tubulaire (522) du segment central (5), ladite tige (80) possédant une première extrémité (84) connectée de manière pivotante sur le premier segment d'extrémité (6) et une deuxième extrémité (83) munie d'un filetage externe, et un organe de manœuvre (20) saisissable avec les doigts d'une main, ledit organe de manœuvre (20) étant connecté de manière rotative sur le deuxième segment d'extrémité (4) et étant solidaire d'un organe femelle fileté (22), ledit organe femelle fileté (22) étant apte à être vissé sur l'extrémité filetée (83) de la tige (80) lorsque la barre (2) est dans sa position transversale et lorsque l'organe de manœuvre (20) est tourné de manière adéquate, verrouillant ainsi la barre (2) dans sa position transversale.

12. Ensemble (1) de barre de toit selon la revendication 11, **caractérisé en ce que** l'organe femelle fileté (22) est apte à être vissé sur un organe mâle fileté (9), notamment une vis, monté sur le premier rail support (3a) lorsque la barre (2) est dans sa position longitudinale et lorsque l'organe de manœuvre (20) est tourné de manière adéquate, verrouillant ainsi la barre (2) dans sa position longitudinale.

13. Ensemble (1) de barre de toit selon la revendication 12, **caractérisé en ce que** l'organe mâle fileté (9) est monté de manière pivotante sur le premier rail support (3a) de telle sorte à pouvoir pivoter entre une position rabattue, dans laquelle il est logé à l'intérieur d'une cavité (12) débouchant sur une face supérieure du premier rail support (3a), et une position déployée, dans laquelle il dépasse de ladite face supérieure et est aligné avec l'organe femelle fileté (22) lorsque la barre (2) est dans sa position longitudinale.

14. Ensemble (1) de barre de toit selon l'une des revendications 9 à 13, **caractérisé en ce que** chaque organe de manœuvre (20, 20', 20") comprend des moyens de blocage (26) destinés à empêcher la rotation de l'organe de manœuvre (20, 20', 20").

15. Ensemble (1) de barre de toit selon la revendication 14, **caractérisé en ce que** chaque organe de manœuvre (20, 20', 20") comprend un corps (23) sensiblement cylindrique, ledit corps possédant un bord périphérique (241, 281) pouvant être saisi manuellement, un logement central (242) apte à loger l'organe fileté (22, 22', 22"), mâle ou femelle, et un logement périphérique entourant ledit logement central (242), ledit logement périphérique étant apte à loger un organe de guidage (48) sensiblement tubulaire formé en saillie le long d'une face externe du premier ou deuxième élément segment d'extrémité (6, 4), ledit organe de manœuvre (20, 20', 20") étant apte à coulisser le long dudit organe de guidage (48) entre une position distale, dans laquelle il est libre de tourner autour dudit organe de guidage (48), et une position proximale, dans laquelle les moyens de blocage (26) sont aptes à empêcher sa rotation autour dudit organe de guidage (48).

16. Ensemble (1) de barre de toit selon la revendication 15, **caractérisé en ce que** les moyens de blocage comprennent un organe de blocage (26) sensiblement annulaire et élastiquement déformable entre une position non déformée et une position déformée, ledit organe de blocage (26) possédant une ouverture centrale (263) apte à loger au moins partiellement l'organe de guidage (48) lorsqu'il est monté sur le corps (23) de l'organe de manœuvre (20, 20', 20"), ladite ouverture centrale (263) possédant au moins une zone plus étroite (261) apte à loger une zone amincie (483) de l'organe de guidage (48), lorsque l'organe de blocage (26) est dans sa position non déformée et lorsque l'organe de manœuvre (20, 20', 20") est dans sa position proximale, et à loger une zone non amincie (482) de l'organe de guidage (48), lorsque l'organe de blocage (26) est dans sa position déformée et lorsque l'organe de manœuvre (20, 20', 20") est dans sa position proximale.

17. Ensemble (1) de barre de toit selon la revendication 16, **caractérisé en ce que** l'organe de blocage (26) comprend au moins une paire d'organes d'appui (264) disposés de manière diamétralement opposée le long du pourtour (262) de l'organe de blocage (26), le passage de la position non déformée à la position déformée s'effectuant par un appui simultané sur lesdits organes d'appui (264).

18. Ensemble (1) de barre de toit selon la revendication 16 ou la revendication 17, **caractérisé en ce que** la zone plus étroite est formée par une saillie (261) en forme de dent dépassant à l'intérieur de l'ouverture centrale (263) de l'organe de blocage (26) et la zone amincie est formée par une rainure (483) formée le long d'un bord périphérique (482) de l'organe de guidage (48).

19. Ensemble (1) de barre de toit selon l'une des revendications précédentes, **caractérisé en ce que** le deuxième segment d'extrémité (4) possède une extrémité inférieure (42-44) en forme de T inversé apte à coopérer par liaison glissière avec une encoche (17) formée dans le deuxième rail support (3b) de manière à fixer de manière démontable la barre (2) sur le deuxième rail support (3b) lorsque la barre (2) est dans sa position transversale.

20. Ensemble (1) de barre de toit selon l'une des revendications précédentes, **caractérisé en ce que** chaque rail support (3a, 3b) comprend une partie évidée (7) apte à loger la barre (2) lorsque la barre (2) est dans sa position longitudinale.

## Patentansprüche

1. Dachbügelanordnung (1), umfassend:
- ein Tragschienenpaar (3a, 3b), nämlich eine erste Tragschiene (3a) und eine zweite Tragschiene (3b), die dazu bestimmt sind, auf jeder Seite eines Fahrzeugdaches befestigt zu werden, wobei jede Tragschiene (3a, 3b) parallel zu einer Längsachse (XX') verläuft, die durch das Fahrzeug definiert wird, wobei die Tragschienen (3a, 3b) in einer im Wesentlichen horizontalen Ebene (H) ausgerichtet sind,
- mindestens einen Bügel (2), der ein mittleres Segment (5) und ein Endsegmentpaar (4, 6), nämlich ein erstes Endsegment (6) und ein zweites Endsegment (4) besitzt,
wobei das erste Endsegment (6) schwenkbar mit der ersten Tragschiene (3a) verbunden ist, um die Positionierung des Bügels (2) entsprechend zweier spezieller Nutzungspositionen, jeweils einer Längsposition, in der das mittlere Segment (5) im Wesentlichen parallel zur Längsachse (XX') verläuft, und einer Querposition, in der das mittlere Segment (5) im Wesentlichen senkrecht zur Längsachse (XX') ausgerichtet ist, zu ermöglichen, und
wobei das zweite Endsegment (4) imstande ist, von Hand demontierbar an der ersten Tragschiene (3a) befestigt zu werden, wenn der Bügel (2) in seiner Längsposition ist, und auf der zweiten Tragschiene (3b), wenn der Bügel (2) in seiner Querposition ist,
**dadurch gekennzeichnet, dass** das erste Endsegment (6) und das zweite Endsegment (4) schwenkbar mit den entgegengesetzten Enden des mittleren Segments (5) verbunden sind, und
dadurch, dass die Länge (I) des Bügels (2) in seiner Längsposition größer als der Abstand (d1) ist, der die Tragschienen (3a, 3b) trennt, sodass der Abstand (d2), der das mittlere Segment (5) von der Ebene (H) trennt, die durch die Tragschienen (3a, 3b) definiert wird, größer ist, wenn der Bügel (2) in seiner Querposition ist, als wenn der Bügel (2) in seiner Längsposition ist.

2. Dachbügelanordnung (1) nach Anspruch 1, **dadurch gekennzeichnet, dass** jede der Tragschienen (3a, 3b) mindestens eine erste Befestigungsstelle (P1) umfasst, an der das erste Endsegment (6) befestigt werden kann, mindestens eine zweite Befestigungsstelle (P2), an der das zweite Endsegment (4) befestigt werden kann, wenn der Bügel (2) in seiner Längsposition ist, und mindestens eine dritte Befestigungsstelle (P3), an der das zweite Endsegment (4) befestigt werden kann, wenn der Bügel (2) in seiner Querposition ist, wobei der Abstand zwischen der ersten und zweiten Befestigungsstelle (P1, P2) größer als der Abstand zwischen der ersten und dritten Befestigungsstelle (P1, P3) ist.

3. Dachbügelanordnung (1) nach einem der vorstehenden Ansprüche, **dadurch gekennzeichnet, dass** das erste Endsegment (6) ein erstes im Wesentlichen flaches Element (61) und ein zweites im Wesentlichen flaches Element (62) umfasst, wobei die erste und zweite Elemente (61, 62) um eine erste horizontale Achse (63) herum zueinander schwenken, das erste Element (61) eine Schwenkachse (72) aufnimmt, die vertikal ausgerichtet ist, um die herum das erste Endsegment (6) schwenkt, und das zweite Element (62) um eine zweite horizontale Achse (13) herum schwenkbar mit dem mittleren Segment (5) verbunden ist.

4. Dachbügelanordnung (1) nach Anspruch 3, **dadurch gekennzeichnet, dass** die erste Tragschiene (3a) mit einem länglichen Schlitz (18) versehen ist, dem entlang die Schwenkachse (72) gleiten kann, wodurch die Verschiebung des ersten Endsegments (6) in einer Richtung parallel zur Längsachse (XX') ermöglicht wird, wenn der Bügel (2) senkrecht zur Längsachse (XX') ausgerichtet ist, und wenn das zweite Element (62) im Wesentlichen mit dem ersten Element (61) fluchtet, oder in Bezug auf das erste Element (61) geringfügig geneigt ist.

5. Dachbügelanordnung (1) nach Anspruch 3 oder Anspruch 4, **dadurch gekennzeichnet, dass** das zweite Element (62) ein Ende (69) in Form eines U beinhaltet, das mit zwei Flügeln (691) versehen ist, die voneinander beabstandet sind, zwischen denn ein entsprechendes Ende (66) des ersten Elements (61) angeordnet ist, wobei die Enden (66, 69) mindestens teilweise einen Spannstift (64) aufnehmen, der entlang der ersten horizontalen Achse (63) fluchtet.

6. Dachbügelanordnung (1) nach Anspruch 5, **dadurch gekennzeichnet, dass** jeder Flügel (691) imstand ist, in einem entsprechenden Ausschnitt (611) des ersten Elements (61) aufgenommen zu werden, wenn das zweite Element (62) im Wesentlichen mit dem ersten Element (61) fluchtet oder in Bezug auf das erste Element (61) geringfügig geneigt ist, und in mindestens einer Nut (19), die auf einer Oberseite der ersten Tragschiene (3a) gebildet ist, und senkrecht zur Längsachse (XX') ausgerichtet ist, wenn das zweite Element (62) senkrecht oder im Wesentlichen senkrecht zum ersten Element (61) ist.

7. Dachbügelanordnung (1) nach Anspruch 6, **dadurch gekennzeichnet, dass** jeder Flügel (691) konfiguriert ist, um sich gezwungenermaßen an eine Bodenfläche der Nut (19) anzulegen, wenn das zweite Element (62) senkrecht oder im Wesentlichen senkrecht zum ersten Element (61) ist, wodurch der Bügel (2) in seiner Querposition gehalten wird.

8. Dachbügelanordnung (1) nach einem der vorstehenden Ansprüche, **dadurch gekennzeichnet, dass** von Hand betätigbare Verriegelungsmittel (20; 80; 20'; 20", 54, 56) vorgesehen sind, um es einem Nutzer zu ermöglichen, den Bügel (2) in seiner Längs- und/oder Querposition zu verriegeln.

9. Dachbügelanordnung (1) nach Anspruch 8, **dadurch gekennzeichnet, dass** die von Hand betätigbaren Verriegelungsmittel ein erstes und ein zweites Handhabungsorgan (20', 20") umfassen, die mit den Fingern einer Hand greifbar sind, wobei das erste beziehungsweise das zweite Handhabungsorgan (20', 20") drehbar mit dem ersten, beziehungsweise dem zweiten Endsegment (6, 4) verbunden sind, und fest mit einem Gewindeeinführungsorgan (22', 22") verbunden sind, wobei das Gewindeeinführungsorgan (22', 22") imstande ist, ins Innere eines ersten, beziehungsweise zweiten Gewindeloches (54, 56) geschraubt zu werden, das im Inneren des mittleren Segments (5) gebildet ist, wenn der Bügel (2) in seiner Querposition ist, und wenn das erste, beziehungsweise zweite Handhabungsorgan (20', 20") angemessen verdreht wird, wodurch der Bügel (2) in seiner Querposition verriegelt wird.

10. Dachbügelanordnung (1) nach Anspruch 9, **dadurch gekennzeichnet, dass** das Gewindeeinführungsorgan (22'), das fest mit dem zweiten Handhabungsorgan (20') verbunden ist, imstande ist, ins Innere eines Gewindeloches geschraubt zu werden, welches im Inneren der ersten Tragschiene (3a) gebildet ist, wenn der Bügel (2) in seiner Längsposition ist, und wenn das zweite Handhabungsorgan (20') angemessen verdreht wird, wodurch der Bügel (2) in seiner Längsposition verriegelt wird.

11. Dachbügelanordnung (1) nach Anspruch 8, **dadurch gekennzeichnet, dass** die von Hand betätigbaren Verriegelungsmittel einen Stift (80) umfassen, der gleitend im Inneren einer rohrförmigen Aufnahme (522) des mittleren Segments (5) angeordnet ist, wobei der Stift (80) ein erstes Ende (84) besitzt, das schwenkbar an dem ersten Endsegment (6) verbunden ist, und ein zweites Ende (83), das mit einem Außengewinde versehen ist, und ein Handhabungsorgan (20), das mit den Fingern einer Hand greifbar ist, wobei das Handhabungsorgan (20) drehbar mit dem zweiten Endsegment (4) verbunden ist, und fest mit einem Innengewindebuchsenorgan (22) verbunden ist, wobei das Innengewindebuchsenorgan (22) imstande ist, an das Gewindeende (83) des Stiftes (80) geschraubt zu werden, wenn der Bügel (2) in seiner Querposition ist, und wenn das Handhabungsorgan (20) angemessen verdreht wird, wodurch der Bügel (2) in seiner Querposition verriegelt wird.

12. Dachbügelanordnung (1) nach Anspruch 11, **dadurch gekennzeichnet, dass** das Innengewindebuchsenorgan (22) imstande ist, auf ein Gewindeeinführorgan (9), insbesondere eine Schraube geschraubt zu werden, die auf der ersten Tragschiene (3a) montiert ist, wenn der Bügel in seiner Längsposition ist, und wenn das Handhabungsorgan (20) angemessen verdreht wird, wodurch der Bügel (2) in seiner Längsposition verriegelt wird.

13. Dachbügelanordnung (1) nach Anspruch 12, **dadurch gekennzeichnet, dass** das Gewindeeinführorgan (9) derart schwenkbar auf der ersten Tragschiene (3a) montiert ist, um zwischen einer eingefahrenen Position, in der sie im Inneren eines Hohlraumes (12) aufgenommen ist, der in eine Oberseite der ersten Tragschiene (3a) mündet, und einer ausgefahrenen Position schwenken zu können, in der sie aus der Oberseite hervorsteht, und mit dem Innengewindebuchsenorgan (22) ausgerichtet ist, wenn der Bügel (2) in seiner Längsposition ist.

14. Dachbügelanordnung (1) nach einem der Ansprüche 9 bis 13, **dadurch gekennzeichnet, dass** jedes Handhabungsorgan (20, 20', 20") Blockiermittel (26) umfasst, die dazu bestimmt sind, die Drehung des Handhabungsorgans (20, 20', 20") zu verhindern.

15. Dachbügelanordnung (1) nach Anspruch 14, **dadurch gekennzeichnet, dass** jedes Handhabungsorgan (20, 20', 20") einen im Wesentlichen zylindrischen Körper (23) umfasst, wobei der Körper einen umfänglichen Rand (241, 281) besitzt, der von Hand ergriffen werden kann, eine mittlere Aufnahme (242), die imstande ist, das Gewindeeinführungs- oder Innengewindebuchsenorgan (22, 22', 22") aufzunehmen, und eine umfängliche Aufnahme, die die mittlere Aufnahme (242) umgibt, wobei die umfängliche Aufnahme imstande ist, ein im Wesentlichen rohrförmiges Führungsorgan (48) aufzunehmen, das entlang einer Außenseite des ersten oder zweiten Endsegmentelements (6, 4) hervorstehend gebildet wird, wobei das Handhabungsorgan (20, 20', 20") imstande ist, entlang des Führungsorgans (48) zwischen einer distalen Position, in der es frei ist, um sich um das Führungsorgan (48) herum zu drehen, und einer proximalen Position zu gleiten, in der die Blockiermittel (26) imstande sind, seine Drehung um das Führungsorgan (48) herum zu verhindern.

16. Dachbügelanordnung (1) nach Anspruch 15, **dadurch gekennzeichnet, dass** die Blockiermittel ein Blockierorgan (26) umfassen, das im Wesentlichen ringförmig ist, und zwischen einer nicht verformten Position und einer verformten Position verformbar ist, wobei das Blockierorgan (26) eine mittlere Öffnung (263) besitzt, die imstande ist, mindestens teilweise das Führungsorgan (48) aufzunehmen, wenn es auf dem Körper (23) des Handhabungsorgans (20, 20', 20") montiert ist, wobei die mittlere Öffnung (263) mindestens eine engere Zone (261) besitzt, die imstande ist, eine verjüngte Zone (483) des Führungsorgans (48) aufzunehmen, wenn das Blockierorgan (26) in seiner nicht verformten Position ist, und wenn das Handhabungsorgan (20, 20', 20") in seiner proximalen Position ist, und eine nicht verjüngte Zone (482) des Führungsorgans (48) aufzunehmen, wenn das Blockierorgan (26) in seiner verformten Position ist, und wenn das Handhabungsorgan (20, 20', 20") in seiner proximalen Position ist.

17. Dachbügelanordnung (1) nach Anspruch 16, **dadurch gekennzeichnet, dass** das Blockierorgan (26) mindestens ein Paar an Anlegeorganen (264) umfasst, die diametral gegenüber, entlang des Umfangs (262) des Blockierorgans (26) angeordnet sind, wobei der Übergang von der nicht verformten Position in die verformte Position durch einen gleichzeitigen Druck auf die Anlegeorgane (264) erfolgt.

18. Dachbügelanordnung (1) nach Anspruch 16 oder Anspruch 17, **dadurch gekennzeichnet, dass** die engere Zone durch einen Überstand (261) in Form eines Zahnes gebildet wird, der im Inneren der mittleren Öffnung (263) des Blockierorgans (26) hervorsteht, und die verjüngte Zone durch eine Nut (483) gebildet wird, die entlang des umfänglichen Randes (482) des Führungsorgans (48) gebildet wird.

19. Dachbügelanordnung (1) nach einem der vorstehenden Ansprüche, **dadurch gekennzeichnet, dass** das zweite Endsegment (4) ein unteres Ende (42-44) in Form eines umgekehrten T besitzt, das imstande ist, durch Gleitverbindung mit einer Kerbe (17) zusammenzuwirken, die in der zweiten Tragschiene (3b) gebildet wird, um den Bügel (2) abnehmbar an der zweiten Tragschiene (3b) zu befestigen, wenn der Bügel (2) in seiner Querposition ist.

20. Dachbügelanordnung (1) nach einem der vorstehenden Ansprüche, **dadurch gekennzeichnet, dass** jede Tragschiene (3a, 3b) einen ausgenommenen Teil (7) umfasst, der imstande ist, den Bügel (2) aufzunehmen, wenn der Bügel (2) in seiner Längsposition ist.

## Claims

1. A roof bar assembly (1) comprising:
- a pair of support rails (3a, 3b), namely a first support rail (3a) and a second support rail (3b), intended to be fastened on each side of a vehicle roof, each support rail (3a, 3b) being parallel to a longitudinal axis (XX') defined by the vehicle, said support rails (3a, 3b) being aligned in a substantially horizontal plane (H),
- at least one bar (2), having a central segment (5) and a pair of end segments (4, 6), namely a first end segment (6) and a second end segment (4),
wherein the first end segment (6) is pivotally connected to the first support rail (3a) so as to allow the positioning of the bar (2) according to two specific use positions, respectively a longitudinal position, in which the central segment (5) is substantially parallel to said longitudinal axis (XX'), and a transverse position, in which the central segment (5) is oriented substantially perpendicular to said longitudinal axis (XX'), and
wherein the second end segment (4) is adapted to be fastened in a manually removable manner on the first support rail (3a), when the bar (2) is in its longitudinal position, and on the second support rail (3b), when the bar (2) is in its transverse position,
**characterized in that** the first end segment (6) and the second end segment (4) are pivotally connected to the opposite ends of said central segment (5), and
**in that** the length (I) of the bar (2) in its longitudinal position is larger than the distance (d1) separating the support rails (3a, 3b) such that the distance (d2) separating the central segment (5) from the plane (H) defined by the support rails (3a, 3b) is greater when the bar (2) is in its transverse position than when the bar (2) is in its longitudinal position.

2. The roof bar assembly (1) according to claim 1, **characterized in that** each of the support rails (3a, 3b) comprises at least one first fastening point (P1), to which the first end segment (6) can be fastened, at least one second fastening point (P2), to which the second end segment (4) can be fastened when the bar (2) is in its longitudinal position, and at least one third fastening point (P3), to which the second end segment (4) can be fastened when the bar (2) is in its transverse position, the distance between the first and second fastening points (P1, P2) being larger than the distance between the first and third fastening points (P1, P3).

3. The roof bar assembly (1) according to any of the preceding claims, **characterized in that** the first end segment (6) comprises a first substantially flat element (61) and a second substantially flat element (62), said first and second elements (61, 62) pivoting relative to each other around a first horizontal axis (63), the first element (61) accommodating a vertically-oriented pivot axis (72) around which the first end segment (6) pivots and the second element (62) being pivotally connected to the central segment (5) around a second horizontal axis (13).

4. The roof bar assembly (1) according to claim 3, **characterized in that** the first support rail (3a) is provided with a longitudinal slot (18) along which the pivot axis (72) can slide, thus allowing movement of the first end segment (6) in a direction parallel to the longitudinal axis (XX') when the bar (2) is oriented perpendicular to the longitudinal axis (XX') and when the second element (62) is substantially aligned with the first element (61) or slightly inclined with respect to the first element (61).

5. The roof bar assembly (1) according to claim 3 or 4, **characterized in that** the second element (62) includes a U-shaped end (69), provided with two flanges (691) spaced apart one from the other, between which is disposed a corresponding end (66) of the first element (61), said ends (66, 69) accommodating at least partially a pin (64), aligned along the first horizontal axis (63).

6. The roof bar assembly (1) according to claim 5, **characterized in that** each flange (691) is adapted to be accommodated in a corresponding cutout (611) of the first element (61) when the second element (62) is substantially aligned with the first element (61) or slightly inclined with respect to the first element (61), and in at least one groove (19), formed on an upper face of the first support rail (3a) and oriented perpendicular to the longitudinal axis (XX'), when the second element (62) is perpendicular or substantially perpendicular to the first element (61).

7. The roof bar assembly (1) according to claim 6, **characterized in that** each flange (691) is configured to come to bear forcibly against a bottom surface of the groove (19) when the second element (62) is perpendicular or substantially perpendicular to the first element (61), thus maintaining the bar (2) in its transverse position.

8. The roof bar assembly (1) according to any of the preceding claims, **characterized in that** manually operable locking means (20, 80; 20', 20", 54, 56) are provided to allow a user to lock the bar (2) in its longitudinal and/or transverse position(s).

9. The roof bar assembly (1) according to claim 8, **characterized in that** the manually operable locking means comprise first and second operating members (20', 20") graspable with the fingers of one hand, said first, respectively second, operating member (20', 20") being rotatably connected to the first, respectively second, end segment (6, 4) and being secured to a threaded male member (22', 22"), said threaded male member (22', 22") being adapted to be screwed inside a first, respectively second, threaded hole (54, 56) formed inside the central segment (5) when the bar (2) is in its transverse position and when the first, respectively second, operating member (20',20") is rotated in an appropriate manner, thus locking the bar (2) in its transverse position.

10. The roof bar assembly (1) according to claim 9, **characterized in that** the threaded male member (22') which is secured to the second operating member (20') is adapted to be screwed inside a threaded hole formed inside the first support rail (3a) when the bar (2) is in its longitudinal position and when the second operating member (20') is rotated in an appropriate manner, thereby locking the bar (2) in its longitudinal position.

11. The roof bar assembly (1) according to claim 8, **characterized in that** the manually operable locking means comprise a rod (80) disposed in sliding manner inside a tubular housing (522) of the central segment (5), said rod (80) having a first end (84) pivotally connected to the first end segment (6) and a second end (83) provided with an outer thread, and an operating member (20) graspable with the fingers of one hand, said operating member (20) being rotatably connected to the second end segment (4) and being secured to a female threaded member (22), said female threaded member (22) being adapted to be screwed onto the threaded end (83) of the rod (80) when the bar (2) is in its transverse position and when the operating member (20) is rotated in an appropriate manner, thus locking the bar (2) in its transverse position.

12. The roof bar assembly (1) according to claim 11, **characterized in that** the female threaded member (22) is adapted to be screwed onto a male threaded member (9), in particular a screw, mounted on the first rail support (3a) when the bar (2) is in its longitudinal position and when the operating member (20) is rotated in an appropriate manner, thus locking the bar (2) in its longitudinal position.

13. The roof bar assembly (1) according to claim 12, **characterized in that** the male threaded member (9) is pivotally mounted on the first support rail (3a) so as to be able to pivot between a folded position, in which it is accommodated inside a cavity (12) opening onto an upper face of the first support rail (3a), and a deployed position, in which it protrudes from said upper face and is aligned with the female threaded member (22) when the bar (2) is in its longitudinal position.

14. The roof bar assembly (1) according to any of claims 9 to 13, **characterized in that** each operating member (20, 20', 20") comprises blocking means (26) intended to prevent the rotation of the operating member (20, 20', 20").

15. The roof bar assembly (1) according to claim 14, **characterized in that** each operating member (20, 20', 20") comprises a substantially cylindrical body (23), said body having a peripheral edge (241, 281) which can be grasped manually, a central housing (242) adapted to accommodate the male or female threaded member (22, 22', 22"), and a peripheral housing surrounding said central housing (242), said peripheral housing being adapted to accommodate a substantially tubular guide member (48) formed protruding along an outer face of the first or second end segment element (6, 4), said operating member (20, 20', 20") being adapted to slide along said guide member (48) between a distal position, in which it is free to rotate around said guide member (48), and a proximal position, in which the blocking means (26) are adapted to prevent its rotation around said guide member (48).

16. The roof bar assembly (1) according to claim 15, **characterized in that** the blocking means comprise a substantially annular and elastically deformable blocking member (26) between an un-deformed position and a deformed position, said blocking member (26) having a central opening (263) adapted to at least partially accommodate the guide member (48) when it is mounted on the body (23) of the operating member (20, 20', 20"), said central opening (263) having at least one narrower area (261) adapted to accommodate a thinned area (483) of the guide member (48), when the blocking member (26) is in its un-deformed position and when the operating member (20, 20', 20") is in its proximal position, and to accommodate an unthinned area (482) of the guide member (48), when the blocking member (26) is in its deformed position and when the operating member (20, 20', 20") is in its proximal position.

17. The roof bar assembly (1) according to claim 16, **characterized in that** the blocking member (26) comprises at least one pair of bearing members (264) disposed diametrically opposite along the periphery (262) of the blocking member (26), the passage from the un-deformed position to the deformed position being carried out by pressing simultaneously on said bearing members (264).

18. The roof bar assembly (1) according to claim 16 or 17, **characterized in that** the narrower area is formed by a tooth-shaped projection (261) protruding inside the central opening (263) of the blocking member (26) and the thinned area is formed by a groove (483) formed along a peripheral edge (482) of the guide member (48).

19. The roof bar assembly (1) according to any of the preceding claims, **characterized in that** the second end segment (4) has a lower end (42-44) in the shape of an inverted T adapted to cooperate by sliding connection with a notch (17) formed in the second support rail (3b) so as to removably fasten the bar (2) on the second support rail (3b) when the bar (2) is in its transverse position.

20. The roof bar assembly (1) according to any of the preceding claims, **characterized in that** each support rail (3a, 3b) comprises a recessed portion (7) adapted to accommodate the bar (2) when the bar (2) is in its longitudinal position.
